# EUROPÄISCHE PATENTANMELDUNG

(11) **EP 4 095 750 A1**
(43) Veröffentlichungstag der Anmeldung: **30.11.2022**
(21) Anmeldenummer: 22166919.5
(22) Anmeldetag: 06.04.2022
(51) Int. Cl.: G06K 9/62, G06V 10/764, G06V 20/52, G08B 13/196

(54) **VERFAHREN ZUM TRAINIEREN EINES ÜBERWACHUNGSSYSTEMS**

(30) Priorität: 28.05.2021 DE 102021205480
(71) Anmelder: Siemens Mobility GmbH, 81739 München (DE)
(72) Erfinder: Schüßler, Michael, 12305 Berlin (DE); Vidal Migallon, Irina, 10999 Berlin (DE)

(57) **Zusammenfassung**

Die Erfindung betrifft ein Verfahren (100) zum Trainieren eines Überwachungsmoduls (201) eines Überwachungssystems (200) zum Überwachen eines Überwachungsbereichs (203), umfassend:
- Empfangen (101) von Sensordaten (207);
- Trainieren (103) des Überwachungsmoduls (201) basierend auf den empfangenen Sensordaten (207) durch maschinelles Lernen auf ein Detektieren eines überwachungsrelevanten Ereignisses innerhalb des Überwachungsbereichs (203) durch Ausführen einer Anomalie-Detektion, wobei zum Trainieren (103) das Überwachungsmodul (201) in das Überwachungssystem (200) am jeweils zu überwachenden Überwachungsbereich (201) integriert ist.

Ferner betrifft die Erfindung ein Verfahren (300) zum Überwachen eines Überwachungsbereichs (203) mit einem Überwachungssystem (200) mit einem trainierten Überwachungsmodul (201). Ferner betrifft die Erfindung ein Verfahren (400) zur Driftkorrektur eines Überwachungsmoduls (201) eines Überwachungssystems (200).

## Beschreibung

Die Erfindung betrifft ein Verfahren zum Trainieren eines Überwachungsmoduls eines Überwachungssystems zum Überwachen eines Überwachungsbereichs. Die Erfindung betrifft ferner ein Verfahren zum Überwachen eines Überwachungsbereichs. Die Erfindung betrifft ferner ein Verfahren zur Drift-Korrektur eines Überwachungssystems.

Betreiber von Überwachungssystemen sind daran interessiert, die Handlungen von Personen zu überwachen, typischerweise aus Gründen der Sicherheit und des Schutzes. Beispielsweise wollen die Betreiber eines Bahnhofs sicherstellen, dass die Bahnsteige nicht überfüllt werden und die Menschen in den sicheren Bereichen bleiben. Mit Hilfe von Videoanalysealgorithmen können solche Überwachungsaufgaben automatisiert werden. Allerdings schränken Datenschutzgesetze die Sammlung von Beispieldaten für das Training von Algorithmen stark ein.

Der Erfindung liegt die Aufgabe zugrunde, ein verbessertes Verfahren zum Trainieren eines Überwachungsmoduls eines Überwachungssystems zum Überwachen eines Überwachungsbereichs bereitzustellen. Es ist ferner eine Aufgabe, ein verbessertes Verfahren zum Überwachen eines Überwachungsbereichs bereitzustellen. Es ist ferner eine Aufgabe, ein verbessertes Verfahren zur Drift-Korrektur eines Überwachungssystems bereitzustellen.

Diese Aufgaben werden durch die Verfahren gemäß den unabhängigen Ansprüchen gelöst. Vorteilhafte Ausgestaltungen sind Gegenstand der untergeordneten Ansprüche.

Nach einem Aspekt der Erfindung wird ein Verfahren zum Trainieren eines Überwachungsmoduls eines Überwachungssystems zum Überwachen eines Überwachungsbereichs bereitgestellt, wobei das Überwachungssystem neben dem Überwachungsmodul wenigstens einen am Überwachungsbereich angeordneten Überwachungssensor umfasst, der eingerichtet ist, den Überwachungsbereich einzusehen, und wobei das Verfahren umfasst:
- Empfangen von Sensordaten des wenigstens einen Sensors des Überwachungssystems, wobei die Sensordaten den Überwachungsbereich abbilden und einen Realzustand des Überwachungsbereichs darstellen, wobei ein Realzustand einen Zustand des Überwachungsbereichs zu einem Aufnahmezeitpunkt beschreibt;
- Trainieren des Überwachungsmoduls basierend auf den empfangenen Sensordaten durch maschinelles Lernen auf ein Detektieren eines überwachungsrelevanten Ereignisses innerhalb des Überwachungsbereichs durch Ausführen einer Anomalie-Detektion, wobei das Trainieren umfasst:
   - Erlernen eines Normalzustands des Überwachungsbereichs durch das Überwachungsmodul, wobei ein Normalzustand des Überwachungsbereichs einen Zustand beschreibt, in dem keine überwachungsrelevanten Ereignisse auftreten;
   - Erlernen einer Detektion einer Abweichung zwischen einem auf Sensordaten basierenden Realzustand und dem Normalzustand und einer Identifikation der Abweichung als einer Detektion eines überwachungsrelevanten Ereignisses durch das Überwachungsmodul;
   wobei zum Trainieren das Überwachungsmodul in das Überwachungssystem am jeweils zu überwachenden Überwachungsbereich integriert ist, wobei die Sensordaten in einem Realbetrieb des Überwachungsbereichs aufgenommen werden, und wobei das Überwachungsmodul basierend auf den Sensordaten des wenigstens einen Sensors des Überwachungssystems auf Eigenschaften des Überwachungsbereichs und/oder des wenigstens einen Sensors angepasst wird.

Hierdurch kann der technische Vorteil erreicht werden, dass ein verbessertes Verfahren zum Trainieren eines Überwachungsmoduls eines Überwachungssystems zum Überwachen eines Überwachungsbereichs bereitgestellt werden kann. Hierzu wird das zu trainierende Überwachungsmodul für das Training bereits in das Überwachungssystem integriert, in dem das Überwachungsmodul nach dem Training zur Überwachung des Überwachungsbereichs ausgeführt werden soll. Zum Training werden die Sensordaten des wenigstens einen Überwachungssensors des Überwachungssystems als Trainingsdaten des Überwachungsmoduls verwendet. Das Überwachungsmodul kann somit unmittelbar auf die Eigenheiten sowohl des Überwachungsbereichs, wie beispielsweise die strukturellen Ausgestaltungen das Überwachungsbereichs, als auch auf die Eigenheiten des Überwachungssensors, wie beispielsweise die Perspektive, über die der Überwachungssensor den Überwachungsbereich einsieht, angepasst werden. Dies ermöglicht ein präzises Training und eine entsprechend hohe Performance des trainierten Systems. Darüber hinaus kann das Erstellen eines umfangreichen Trainingsdatensatzes zum Trainieren des Überwachungsmoduls vermieden werden, indem zum Training die Sensordaten des Überwachungssensors des Überwachungssystems verwendet werden, die unmittelbar vor Ausführung des Trainings durch den Überwachungssensor aufgenommen wurden. Darüber hinaus kann durch Verwendung der unmittelbar aufgenommenen Sensordaten des Überwachungssensors die Problematik des Datenschutzes umgangen werden, die bei öffentlichen Überwachungsbereichen mit einer Frequentierung von Privatpersonen auftreten kann, indem kein expliziter Trainingsdatensatz zum Trainieren des Überwachungsmoduls erstellt werden muss, da das Überwachungsmodul unmittelbar innerhalb des Überwachungssystems trainiert wird. Die Sensordaten des Überwachungssensors verlassen somit zu keinem Zeitpunkt vor oder während des Trainings des Überwachungsmoduls das Überwachungssystem. Durch das Trainieren des Überwachungsmoduls auf die Ausführung einer Anomalie-Detektion zur Detektion von überwachungsrelevanten Ereignissen kann ein leistungsfähiges Überwachungssystem bereitgestellt werden. Durch die Verwendung der Anomalie-Detektion kann insbesondere ein Überwachungssystem bereitgestellt werden, das eingerichtet ist, eine Vielzahl von überwachungsrelevanten Ereignissen zu detektieren. Das Überwachungsmodul ist somit nicht auf eine Detektion von überwachungsrelevanten Ereignissen beschränkt, die im Trainingsprozess berücksichtigt wurden. Durch die Verwendung der Anomalie-Detektion ist das Überwachungsmodul ferner in der Lage, nach Abschluss des Trainings und in der Ausführung des Überwachungsmoduls zum Überwachen des Überwachungsbereichs überwachungsrelevante Ereignisse zu detektieren, die während des Trainingsprozesses unberücksichtigt blieben. Dies kann dadurch erreicht werden, dass das Überwachungsmodul die überwachungsrelevanten Ereignisse nicht als solche erkennt, da das Modul auf diese speziellen Ereignisse explizit trainiert wurde, sondern überwachungsrelevante Ereignisse lediglich als Anomalien sprich Abweichungen zum erlernten Normalzustand detektiert. Indem das Überwachungsmodul den Normalzustand als Zustand, in dem keine überwachungsrelevanten Ereignisse auftreten und in dem für den jeweiligen Überwachungsmodul ausschließlich normale und zu erwartende Ereignisse auftreten, kann das Überwachungsmodul jegliche überwachungsrelevanten Ereignisse als Abweichungen zum erlernten Normalzustand detektieren. Die Detektion ist somit nicht auf die Art von Ereignissen beschränkt, die im Trainingsprozess trainiert wurde. Hierdurch sind eine erhöhte Anwendbarkeit und eine hohe Präzision des Überwachungssystems bereitgestellt.

Nach einer Ausführungsform wird das Trainieren des Überwachungsmoduls unmittelbar bei einer Aufnahme der Sensordaten durch den wenigstens einen Sensor des Überwachungssystems ausgeführt.

Hierdurch kann der technische Vorteil erreicht werden, dass eine Zwischenspeicherung der Sensordaten zum Ausführen des Trainings des Überwachungsmoduls vermieden werden kann.

Nach einer Ausführungsform umfassen die Eigenschaften des Überwachungsbereichs bautechnische Ausgestaltungen des Überwachungsbereichs und/oder ein Vorhandensein unbeweglicher Objekte innerhalb des Überwachungsbereichs, wobei Eigenschaften des Sensors einen Typ des Sensors und/oder der Sensordaten und/oder eine Perspektive umfassen, in der der Überwachungsbereich durch die Sensordaten abgebildet wird.

Hierdurch kann der technische Vorteil erreicht werden, dass eine präzise Anpassung des Überwachungsmoduls an die Eigenschaften sowohl des Überwachungsbereichs als auch des Überwachungssensors erreicht werden kann. Durch die präzise Anpassung des Überwachungsmoduls kann eine erhöhte Präzision des Überwachungsmoduls im Detektieren der überwachungsrelevanten Ereignisse erreicht werden, indem das Überwachungsmodul mit erhöhter Präzision darauf trainiert werden kann, sowohl den Normalzustand des Überwachungsbereichs zu erlernen als auch entsprechende Abweichungen von Realzuständen zum jeweiligen Normalzustand zu ermitteln.

Nach einer Ausführungsform erfolgt das Erlernen des Normalzustands und/oder das Erlernen der Detektion der Abweichung durch das Überwachungsmodul basierend auf den Sensordaten durch nicht-überwachtes oder überwachtes Lernen, wobei bei nicht-überwachtem Lernen das Überwachungsmodul unter Berücksichtigung einer Häufigkeit und Ähnlichkeit der detektierten Realzustände den Normalzustand erlernt, und wobei bei überwachtem Lernen dem Überwachungsmodul durch ein geschultes Personal der Normalzustand und/oder ein überwachungsrelevante Ereignis gekennzeichnet wird, indem durch das Personal vom Überwachungsmodul detektierte Abweichungen beurteilt und gemäß der Beurteilung dem Überwachungsmodul als zum Normalzustand gehörig oder als überwachungsrelevantes Ereignis gekennzeichnet werden.

Hierdurch kann der technische Vorteil erreicht werden, dass ein präzises Training des Überwachungsmoduls bereitgestellt werden kann, das sowohl als nicht-überwachtes Lernen als auch als überwachtes Lernen ausgeführt werden kann. Bei einem nicht-überwachten Lernen ermittelt das Überwachungsmodul den Normalzustand des Überwachungsbereichs hierbei durch Berücksichtigung einer Anzahl und Ähnlichkeit von ermittelten Realzuständen. Gegenüber dem Normalzustand treten Anomalien bzw. Abweichungen in Form von überwachungsrelevanten Ereignissen mit einer verringerten Häufigkeit bzw. Wahrscheinlichkeit auf. Das Überwachungsmodul erlernt somit den Normalzustand des Überwachungsbereichs basierend auf den am häufigsten auftretenden Realzuständen des Überwachungsbereichs, die jeweils auf den jeweiligen Sensordaten basierend Zustände des Überwachungsbereichs definieren. Anomalien bzw. Abweichungen werden demzufolge durch das Überwachungsmodul als vergleichsweise selten auftretende Ereignisse bzw. vom Normalzustand abweichende Realzustände definiert. Bei überwachtem Lernen kann das Lernen des Normalzustands als auch das Erlernen der Detektion von Abweichungen vom Normalzustand durch entsprechend trainiertes Personal unterstützt werden. Das Personal beurteilt hierbei die durch das Überwachungsmodul detektierten Abweichungen und ordnet diese entweder dem Normalzustand zu, wenn die Abweichung irrelevant war, oder definiert die Abweichung als tatsächlich überwachungsrelevantes Ereignis, wenn die durch das Überwachungsmodul detektierte Abweichung einem überwachungsrelevanten Ereignis entspricht.

Nach einer Ausführungsform umfasst das Verfahren ferner: Vortrainieren des Überwachungsmoduls basierend auf einem Trainingsdatensatz, wobei der Trainingsdatensatz Sensordaten eines Typs umfasst, der dem Typ der Sensordaten des Sensors entspricht, und wobei durch das Vortraining das Überwachungsmodul auf den Typ der Sensordaten und/oder den Typ des Sensors des Überwachungssystems trainiert wird.

Hierdurch kann der technische Vorteil erreicht werden, dass eine zusätzliche Verbesserung des Trainings des Überwachungsmoduls ermöglicht ist. Hierzu wird das Überwachungsmodul basierend auf einem explizit erstellen Trainingsdatensatz vortrainiert, wobei die Daten des Trainingsdatensatzes vom Typ her den Sensordaten des Überwachungssensors entsprechen. Die Daten des Trainingsdatensatzes müssen jedoch nicht explizit Sensordaten des tatsächlichen Überwachungssensors des Überwachungssystems sein. Es ist ausreichend, wenn die Trainingsdaten vom gleichen Datentyp sind wie die Sensordaten, sprich Videodaten oder Infrarotdaten oder ähnliches. Durch das Vortraining kann das Überwachungsmodul auf den Typ der Sensordaten und/oder den Typ des Überwachungssensors trainiert werden. Eine Anpassung an die Eigenheiten des Überwachungsbereichs findet im Vortraining jedoch nicht statt. Die Daten des Trainingsdatensatzes müssen somit den zu überwachenden Überwachungsbereich nicht zwingend abbilden, sondern können beliebige andere Bereiche oder Gegenstände abbilden. Vorteilhaft können die Trainingsdaten des Vortrainings auch eine Mehrzahl verschiedener Perspektiven umfassen, in denen die jeweiligen Bereiche oder Gegenstände der Trainingsdaten abgebildet sind. Hierdurch kann vermieden werden, dass im Vortraining das Überwachungsmodul auf eine bestimmte Perspektive des Trainingsdatensatzes angepasst wird. Eine solche Anpassung soll jedoch erst im eigentlichen Training basierend auf den Sensordaten des Überwachungssensors des Überwachungssystems vorgenommen werden, in dem das Überwachungsmodul explizit auf die Perspektive des jeweiligen Überwachungssensors angepasst wird, auf dem das Überwachungsmodul nach erfolgreichem Training auszuführen ist.

Nach einer Ausführungsform wird ein Normalzustand für einen vorbestimmten Zeitabschnitt bestimmt, wobei Normalzustände verschiedener Zeitabschnitte unterschiedlich sind, und wobei ein vorbestimmter Zeitabschnitt durch eine vorbestimmte Tageszeitspanne definiert ist.

Hierdurch kann der technische Vorteil erreicht werden, dass eine präzise Definition des Normalzustands durch das Überwachungsmodul und damit verbunden eine präzise Detektion von überwachungsrelevanten Ereignissen ermöglicht ist. Bei Überwachungen von öffentlichen Räumen mit einer Frequentierung von Personen kann insbesondere die Frequentierung der Personen von der jeweiligen Tageszeit abhängig sein. Beispielsweise kann bei Überwachung von Bahnhöfen oder Gleisabschnitten die Frequentierung der Fahrgäste in Abhängigkeit der Tageszeit stark fluktuieren. Durch die Einteilung des Normalzustands in verschiedene Tageszeitabschnitte, für die die einzelnen Normalzustände unterschiedlich charakterisiert sein können, kann eine Präzision des Überwachungssystems verbessert werden. Bei der Überwachung von öffentlich zugänglichen Räumen wird die übliche Frequentierung der jeweiligen Überwachungsbereiche durch Personen dem Normalzustand des jeweiligen Überwachungsbereichs zugerechnet. Durch die Einteilung in verschiedene Tageszeitabschnitte, in denen die Frequentierung des Bereichs durch Personen unterschiedlich ist, kann somit eine präzisere Bestimmung des Normalzustands und damit verbunden eine präzisere Detektion der überwachungsrelevanten Ereignisse erreicht werden.

Nach einer Ausführungsform umfasst das Überwachungsmodul ein Auto-Encoder-Modul, wobei das Auto-Encoder-Modul eingerichtet ist, basierend auf den Sensordaten des wenigstens einen Sensors einen Realzustand zu bestimmen und den Realzustand mit dem erlernten Normalzustand zu vergleichen.

Hierdurch kann der technische Vorteil erreicht werden, dass ein leistungsfähiges Überwachungsmodul bereitgestellt werden kann, das eingerichtet ist, eine Anomalie-Detektion durchzuführen und basierend auf der Anomalie-Detektion überwachungsrelevante Ereignisse zu detektieren.

Nach einer Ausführungsform umfasst der Überwachungsbereich einen Bereich aus der folgenden Liste: einen Gleisbereich, einen Bahnsteigbereich, einen Eingangshallenbereich, einen ausschließlich für autorisiertes Personal zugänglichen Bereich innerhalb eines Bahnhofsgeländes, einen Depotbereich für Züge und/oder Zug- bzw. Schienenmaterial.

Hierdurch kann der technische Vorteil erreicht werden, dass eine präzise Überwachung von Überwachungsbereichen im Bereich des Schienenverkehrs bereitgestellt werden kann.

Nach einer Ausführungsform beschreibt ein vom Normalzustand abweichendes überwachungsrelevantes Ereignis eine der folgenden Situationen:
eine Person und/oder ein Gegenstand befindet sich in einem Gleisbereich; und/oder
ein Gegenstand blockiert ein Gleis oder eine Stromführungsleitung; und/oder
eine Anzahl an einem Bahnsteig befindlicher Personen übersteigt eine zulässige Maximalanzahl; und/oder
am Bahnsteig befindet sich ein abgestellter unbeaufsichtigter Gegenstand; und/oder
eine nicht-autorisierte Person befindet sich in einem nicht öffentlich zugänglichen Bereich; und/oder
eine gefährliche und/oder illegale Handlungen findet statt.

Hierdurch kann der technische Vorteil erreicht werden, dass eine präzise Detektion von überwachungsrelevanten Ereignissen für Überwachungsbereiche im Bereich des Schienenverkehrs ermöglicht ist. Ereignisse, die im Bereich des Schienenverkehrs auftreten können und die durch ein entsprechendes Überwachungssystem zwingend zu erkennen sind, können somit durch das erfindungsgemäße Überwachungssystem präzise detektiert werden.

Nach einer Ausführungsform wird das Training des Überwachungsmoduls vor Inbetriebnahme des Überwachungssystems und/oder wiederholt während eines Betriebs des Überwachungssystems ausgeführt.

Hierdurch kann der technische Vorteil erreicht werden, dass das Training des Überwachungsmoduls flexibel einsetzbar ist.

Nach einer Ausführungsform umfassen die Sensordaten Bilddaten und/oder Videodaten und/oder Radardaten und/oder Infrarotdaten.

Hierdurch kann der technische Vorteil erreicht werden, dass eine detaillierte Überwachung des Überwachungsbereichs ermöglicht ist.

Nach einem zweiten Aspekt der Erfindung wird ein Verfahren zum Überwachen eines Überwachungsbereichs mit einem Überwachungssystem mit einem Überwachungsmodul bereitgestellt, wobei das Überwachungsmodul nach dem erfindungsgemäßen Verfahren zum Trainieren eines Überwachungsmoduls nach einer der voranstehenden Ausführungsformen trainiert ist, und wobei das Verfahren umfasst:
Empfangen von Sensordaten des Sensors des Überwachungssystems, wobei die Sensordaten den zu überwachenden Überwachungsbereich abbilden und einen Realzustand des Überwachungsbereichs darstellen;
Ausführen des trainierten Überwachungsmoduls auf die Sensordaten und Detektieren eines überwachungsrelevanten Ereignisses durch Ausführen einer Anomalie-Detektion; und
Ausgeben einer das überwachungsrelevante Ereignis anzeigenden Warnmeldung.

Hierdurch kann der technische Vorteil erreicht werden, dass ein verbessertes Verfahren zum Überwachen eines Überwachungsbereichs mit einem Überwachungssystem mit einem Überwachungsmodul bereitgestellt werden kann. Das Überwachungsmodul ist hierbei gemäß dem erfindungsgemäßen Verfahren zum Trainieren eines Überwachungsmoduls trainiert und weist damit die oben angeführten technischen Vorteile auf. Insbesondere kann durch die Verwendung der Anomalie-Detektion zur Detektion der überwachungsrelevanten Ereignisse eine zuverlässige und präzise Überwachung des Überwachungsbereichs bereitgestellt werden. Im Zuge der Anomalie-Detektion, durch die die überwachungsrelevanten Ereignisse lediglich als Abweichungen vom erlernten Normalzustand detektiert werden, können während der Ausführung des entsprechend trainierten Überwachungsmoduls überwachungsrelevante Ereignisse detektiert werden, die während des Trainings des Überwachungsmoduls nicht als mögliche Ereignisse bedacht wurden. Hierdurch kann die Präzision der Überwachung durch das Überwachungssystem erhöht werden.

Nach einem dritten Aspekt der Erfindung wird ein Verfahren zur Driftkorrektur des Überwachungsmoduls des Überwachungssystems bereitgestellt, umfassend:
Ermitteln eines Drifts des Überwachungsmoduls während einer Überwachung des Überwachungsbereichs durch das Überwachungssystem gemäß dem Verfahren zum Überwachen eines Überwachungsbereichs, wobei der Drift als eine Verschlechterung eines Detektierens eines überwachungsrelevanten Ereignisses durch das Überwachungsmodul ermittelt wird; und
Ausführen eines Trainings des Überwachungsmoduls gemäß dem Verfahren zum Trainieren eines Überwachungsmoduls nach einer der voranstehenden Ausführungsformen.

Hierdurch kann der technische Vorteil erreicht werden, dass ein verbessertes Verfahren zur Driftkorrektur des Überwachungsmoduls des Überwachungssystems bereitgestellt werden kann. Indem bei Ermittlung des Drifts des Überwachungsmoduls, der als eine Verschlechterung der Detektion von überwachungsrelevanten Ereignissen durch das Überwachungsmodul definiert ist, das Überwachungsmodul gemäß den erfindungsgemäßen Verfahren zum Trainieren des Überwachungsmoduls erneut trainiert wird, wodurch der Drift reduziert bzw. behoben werden kann, kann eine erhöhte Präzision der Überwachung durch das Überwachungssystem erreicht werden.

Nach einem vierten Aspekt der Erfindung wird eine Recheneinheit bereitgestellt, wobei die Recheneinheit ausgebildet ist, das Verfahren zum Trainieren eines Überwachungsmoduls eines Überwachungssystems zum Überwachen eines Überwachungsbereichs eines Schienenverkehrsbereichs nach einer der voranstehenden Ausführungsformen und/oder das Verfahren zum Überwachen eines Überwachungsbereichs mit einem Überwachungssystem und/oder das Verfahren zur Driftkorrektur des Überwachungsmoduls des Überwachungssystems auszuführen.

Nach einem fünften Aspekt der Erfindung wird ein Computerprogrammprodukt umfassend Befehle bereitgestellt, die bei der Ausführung des Programms durch eine Datenverarbeitungseinheit diese veranlassen, das Verfahren zum Trainieren eines Überwachungsmoduls eines Überwachungssystems zum Überwachen eines Überwachungsbereichs eines Schienenverkehrsbereichs nach einer der voranstehenden Ausführungsformen und/oder das Verfahren zum Überwachen eines Überwachungsbereichs mit einem Überwachungssystem und/oder das Verfahren zur Driftkorrektur des Überwachungsmoduls des Überwachungssystems auszuführen.

Die oben beschriebenen Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen jeweils:
- FIG 1: eine schematische Darstellung eines Überwachungssystems zum Überwachen eines Überwachungsbereichs gemäß einer Ausführungsform;
- FIG 2: ein Flussdiagramm eines Verfahrens zum Trainieren eines Überwachungsmoduls eines Überwachungssystems gemäß einer Ausführungsform;
- FIG 3: ein Flussdiagramm eines Verfahrens zum Überwachen eines Überwachungsbereichs gemäß einer Ausführungsform;
- FIG 4: ein Flussdiagramm eines Verfahrens zur Driftkorrektur eines Überwachungsmoduls eines Überwachungssystems gemäß einer Ausführungsform; und
- FIG 5: eine schematische Darstellung eines Computerprogrammprodukts.

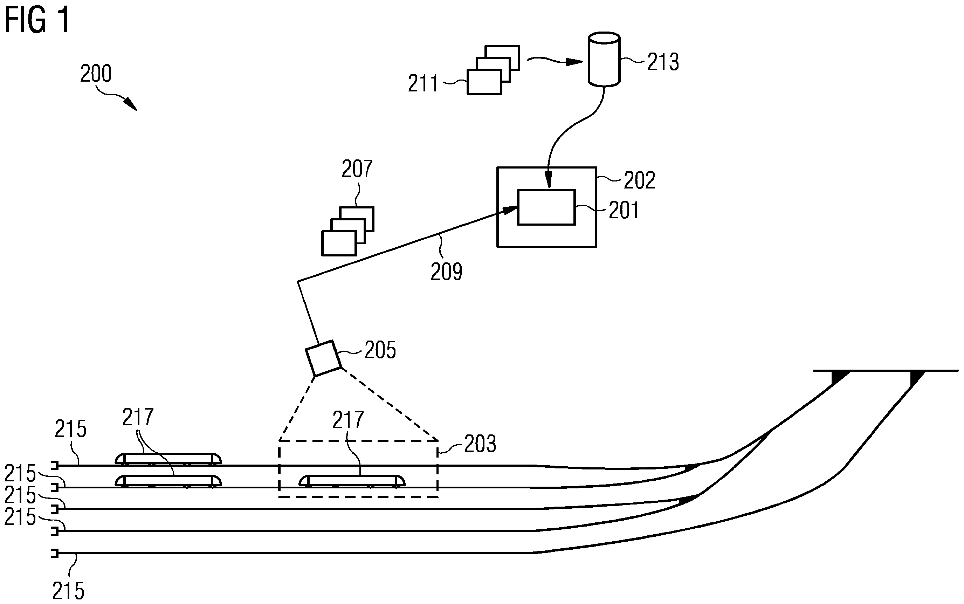

FIG 1 zeigt eine schematische Darstellung eines Überwachungssystems 200 zum Überwachen eines Überwachungsbereichs 203 gemäß einer Ausführungsform.

FIG 1 zeigt eine Ausführungsform eines Überwachungssystems 200 in einem Schienenverkehrskontext. In FIG 1 ist hierzu ein Anwendungsfall der vorliegenden Erfindung zur Überwachung eines Abstellgleises für Schienenfahrzeuge 217 dargestellt. Hierzu zeigt die FIG 1 eine Mehrzahl verschiedener Abstellgleise 215, auf denen eine Mehrzahl von Schienenfahrzeugen 217 geparkt bzw. abgestellt werden können. Das erfindungsgemäße Überwachungssystem 200 ist hierbei eingerichtet, einen Überwachungsbereich 203 zu überwachen, der in der gezeigten Ausführungsform einen Abschnitt von zwei Abstellgleisen 215 umfasst, und in dem in FIG 1 ein Schienenfahrzeug 217 positioniert ist.

Die in FIG 1 angeführte Ausführungsform ist lediglich beispielhaft und soll die vorliegende Erfindung nicht einschränken. So kann ein erfindungsgemäßes Überwachungssystem 200 auf beliebige Überwachungsbereiche 203 angewendet werden, die unterschiedliche Aspekte, beispielsweise in einem Schienenverkehrskontext, umfassen. Beispielsweise kann ein Überwachungsbereich 203, abweichend zu der hier gezeigten Situation, einen beliebigen Gleisbereich, einen Bahnsteinbereich, einen Eingangshallenbereich eines Bahnhofsgeländes, einen ausschließlich für autorisiertes Personal zugänglichen Bereich innerhalb eines Bahnhofsgeländes, einen Depotbereich für Züge und/oder Zug- bzw. Schienenmaterial oder einen beliebigen anderen überwachungsrelevanten Bereich umfassen.

In der gezeigten Ausführungsform umfasst das Überwachungssystem 200 ferner einen Überwachungssensor 205, der eingerichtet ist, den Überwachungsbereich 203 einzusehen und entsprechende den Überwachungsbereich 203 abbildende Sensordaten 207 aufzunehmen. Der Überwachungssensor 205 kann beispielsweise ein Bild- bzw. Kamerasensor, ein Infrarotsensor oder ein Radarsensor sein. Die entsprechenden Sensordaten 207 können entsprechend Bild- oder Videodaten, Infrarotdaten oder Radardaten umfassen.

Das Überwachungssystem 200 umfasst ferner eine Recheneinheit 202, auf der ein Überwachungsmodul 201 ausführbar ist. Die Recheneinheit 202 kann beispielsweise als ein Computerterminal eines Leitstands bzw. einer entsprechenden Abteilung einer Überwachungszentrale ausgebildet sein und durch entsprechend geschultes Personal einsehbar bzw. bedienbar sein.

Über die Recheneinheit 202 und das darauf ausführbare Überwachungsmodul 201 ist das gezeigte Überwachungssystem 200 eingerichtet, die erfindungsgemäßen Verfahren zum Trainieren eines Überwachungsmoduls 201, das erfindungsgemäße Verfahren zur Überwachung eines Überwachungsbereichs 203 und das erfindungsgemäße Verfahren zur Driftkorrektur auszuführen.

Zur Ausführung des erfindungsgemäßen Verfahrens zum Trainieren des Überwachungsmoduls 201 wird das Überwachungsmodul 201 zunächst auf der Recheneinheit 202 des Überwachungssystems 200 installiert. Das zu trainierende Überwachungsmodul 201 wird somit direkt vor Ort in dem System trainiert, in dem das trainierte Überwachungsmodul 201 zur Überwachung des Überwachungsbereichs 203 nach erfolgreichem Training auszuführen ist. Das Training des Überwachungsmoduls 201 findet damit auf den Sensordaten 207 des Überwachungssensors 205 des Überwachungssystems 200 statt, auf denen das Überwachungsmodul 201 zur Überwachung des Überwachungsbereichs 203 auch ausgeführt werden soll.

Die Sensordaten 207 des Überwachungssensors 205 werden hierbei über eine Datenkommunikation 209 dem Überwachungsmodul 201 als entsprechende Trainingsdaten zugeführt. Zum Training des Überwachungsmoduls 201 wird somit der Überwachungsbereich 203 durch den Überwachungssensor 205 eingesehen und entsprechende Sensordaten 207 erstellt. Das Training des Überwachungsmoduls 201 unter Ausführung von Prozessen des maschinellen Lernens kann hierbei unmittelbar bei Eingang der Sensordaten 207 des Überwachungssensors 205 erfolgen. Beispielsweise können hierzu bei Videodaten des Überwachungssensors 205 einzelne Frames als Eingabedaten dem Überwachungsmodul 201 zugeführt werden. Alternativ können die Sensordaten 207 für einen vorbestimmten Zeitraum, beispielsweise einen Tag, als Datensatz zusammengefasst und gespeichert werden, sodass das Überwachungsmodul 201 basierend auf den gespeicherten Datensätzen trainiert werden kann.

Zum Trainieren des in das Überwachungssystem 200 integrierten Überwachungsmoduls 201 werden somit Sensordaten 207 des Überwachungssensors 205, die den Überwachungsbereich 203 abbilden, empfangen. Das Überwachungsmodul 201 wird darauffolgend basierend auf den empfangenen Sensordaten 207 darauf trainiert, überwachungsrelevante Ereignisse durch Ausführung einer Anomalie-Detektion zu detektieren. Hierzu erlernt das Überwachungsmodul 201, zunächst einen Normalzustand des Überwachungsbereichs 203 zu bestimmen. Ferner erlernt das Überwachungsmodul 201, basierend auf den Sensordaten 207 Abweichungen von dem Normalzustand des Überwachungsbereichs 203 zu detektieren und entsprechend detektierte Abweichungen vom Normalzustand als überwachungsrelevante Ereignisse zu identifizieren.

Das Training des Überwachungsmoduls 201 kann hierbei als überwachtes Lernen oder als nicht-überwachtes Lernen ausgeführt werden. Beim nicht-überwachten Lernen lernt das Überwachungsmodul 201 anhand der Häufigkeit der auftretenden Realzustände des Überwachungsbereichs 203 einen entsprechenden Normalzustand des Überwachungsbereichs 203. Ein Realzustand ist hierbei ein gemäß den Sensordaten 207 des Überwachungssensors 205 bestimmter Zustand des Überwachungsbereichs zum Zeitpunkt der Aufnahme der Sensordaten 207. Der Normalzustand ist hingegen als ein Zustand des Überwachungsbereichs 203 definiert, in dem für den jeweiligen Überwachungsbereich 203 normale bzw. zu erwartende Ereignisse auftreten, in dem somit keine Anomalien in Form von unvorhergesehenen bzw. überwachungsrelevanten Ereignissen beobachtet werden. Definitionsgemäß treten Anomalien und entsprechende anormale Ereignisse eher selten auf, während der Normalzustand der Realzustand des Überwachungsbereichs 203 ist, der zeitlich am häufigsten auftritt und zu beobachten ist.

Bei überwachtem Lernen kann zur Unterstützung des Lernvorgangs des Überwachungsmoduls 201 ein entsprechend geschultes Personal mitwirken, das die jeweilig durch das Überwachungsmodul 201 detektierten Realzustände des Überwachungsbereichs 203 entweder dem Normalzustand zuordnet oder als Anomalie bzw. überwachungsrelevantes Ereignis klassifiziert.

In dem gezeigten Beispiel kann ein Normalzustand des Überwachungsbereichs 203 beispielsweise dadurch gegeben sein, dass die im Überwachungsbereich 203 angeordneten Gleise 215 in unregelmäßigen Zeitabständen von entsprechenden Schienenfahrzeugen 217 befahren werden, und die Schienenfahrzeuge 217 hierbei auf den jeweiligen Gleisen 215 für unregelmäßige Zeitabstände abgestellt werden. Personen werden für gewöhnlich eher selten an den Gleisen 215 zu beobachten sein. Eine Anomalie bzw. ein überwachungsrelevantes Ereignis könnte in diesem Zusammenhang somit dadurch gegeben sein, dass unautorisierte Personen sich im Überwachungsbereich 203 befinden. Alternativ oder zusätzlich könnten die Gleise 215 blockierende Objekte, beispielsweise herabgefallen Äste oder abgestellte Kraftfahrzeuge, als überwachungsrelevante Ereignisse detektiert werden, die nicht einem Normalbetrieb eines Abstellgleises 215 entsprechen.

Das Überwachungsmodul 201 kann erfindungsgemäß als ein Auto-Encoder-Modul ausgebildet sein. Das Auto-Encoder-Modul kann eingerichtet sein, basierend auf dem erlernten Normalzustand des Überwachungsbereichs 203 und den Sensordaten 207 des Überwachungssensors 205 einen zu erwartenden Realzustand vorherzusagen und diesen mit dem jeweiligen Normalzustand zu vergleichen. Bei Abweichungen des vorhergesagten Realzustands zu dem zu erwartenden Normalzustand wird eine entsprechende Abweichung bzw. ein entsprechendes überwachungsrelevantes Ereignis identifiziert.

Durch das Trainieren des Überwachungsmoduls 201 auf den Sensordaten 207 des Überwachungssensors 205 wird das Überwachungsmodul 201 direkt auf die Eigenschaften des Überwachungsbereichs 203 bzw. die Eigenschaften des Überwachungssensors 205 angepasst. Die Eigenschaften des Überwachungsbereichs 203 können hierbei strukturelle Eigenschaften wie vorhandene Infrastruktur sein. In dem gezeigten Beispiel können beipsielsweise die Anordnung, Anzahl und die Geometrie der Gleise 215 wie auch Merkmale des Hintergrunds strukturelle Eigenschaften des Überwachungsbereichs 203sein. Die Eigenschaften des Überwachungssensors 205 bzw. der entsprechenden Sensordaten 207 können neben dem Typ der Sensordaten 207, beispielsweise Bild- oder Videodaten oder Infrarotdaten, eine Perspektive des Überwachungssensors 205 umfassen, in der der Überwachungssensor 205 den Überwachungsbereich 203 einsieht.

Durch das vor Ort ausgeführte Training des Überwachungsmoduls 201, bei dem das Überwachungsmodul 201 in das Überwachungssystem 200 integriert ist, in dem das Überwachungsmodul 201 nach erfolgreichem Training zur Überwachung des Überwachungsbereichs 203 ausgeführt werden soll, kann somit eine präzise Anpassung des Überwachungsmoduls 201 an die Charakteristiken sowohl des zu überwachenden Überwachungsbereichs 203 als auch des verwendeten Überwachungssensors 205 und der jeweils dazugehörigen Sensordaten 207 angepasst werden.

Gemäß einer Ausführungsform kann der Normalzustand durch das Überwachungsmodul 201 für einen vorbestimmten Zeitabschnitt bestimmt werden. Beispielsweise können die Ereignisse, die sich im Überwachungsbereich 203 abspielen und den Normalzustand bzw. überwachungsrelevante Ereignisse definieren, für bestimmte Zeitabschnitte, beispielsweise bestimmte Tageszeitabschnitte bzw. Tageszeiten, definiert werden. So kann beispielsweise das Überwachungsmodul 201 verschiedene Normalzustände für verschiedene Tageszeiten durch eine entsprechende Gruppierung der Sensordaten 207 erlernen. Bei öffentlich zugänglichen Überwachungsbereichen, beispielsweise Bahnhöfen oder Bahnsteigen, können zu verschiedenen Tageszeiten unterschiedliche Frequentierungen der jeweiligen Bereiche durch Personen auftreten. Die Normalzustände der jeweiligen Bereiche, die normal zu erwartende Ereignisse innerhalb der Bereiche beschreiben, können somit zu unterschiedlichen Tageszeiten verschieden sein. Durch die entsprechende Gruppierung der Sensordaten 207 kann das Überwachungsmodul 201 auf die verschiedenen Tageszeiten und die darin zu erwartenden verschiedenen Normalzustände trainiert werden.

Gemäß einer Ausführungsform kann das Trainieren des Überwachungsmoduls 201 ferner ein Vortraining umfassen, in dem das Überwachungsmodul 201 basierend auf einem Trainingsdatensatz 213, der eine Mehrzahl weiterer Sensordaten 211 umfasst, trainiert wird. Die weiteren Sensordaten 211 können hierbei Sensordaten verschiedener Überwachungssensoren sein, die nicht zwingend der jeweilige Überwachungssensor 205 des Überwachungssystems 200 sein müssen. Die weiteren Sensordaten 211 müssen darüber hinaus nicht den jeweiligen Überwachungsbereich 203 abbilden, sondern können beliebige Bereiche oder Gegenstände abbilden. Darüber hinaus können die weiteren Sensordaten 211 eine Vielzahl verschiedener Perspektiven beschreiben, über die die jeweiligen Sensordaten aufgenommen wurden. Ziel des Vortrainings ist es, das Überwachungsmodul 201 auf den jeweiligen Datentyp der Sensordaten 207 des Überwachungssensors 205 und den jeweiligen Typ des Überwachungssensors 205, sprich beispielsweise auf Videodaten einer Videokamera, anzupassen. Das Vortraining kann insbesondere vor Implementierung des Überwachungsmoduls 201 im Überwachungssystem 200 stattfinden. Beispielsweise kann das Vortraining werkseitig vor Auslieferung des Überwachungsmoduls 201 ausgeführt werden. Durch das Vortraining, in dem das Überwachungsmodul 201 auf den Sensortyp des Überwachungssensors 205 und Datentypen der Sensordaten 207 angepasst wird, kann das vor Ort ausgeführte Training des im Überwachungssystem 200 implementierten Überwachungsmoduls 201 basierend auf den Sensordaten 207 des Überwachungssensors 205 des Überwachungssystems 200 vereinfacht und zeitlich beschleunigt werden.

Nach abgeschlossenem Training ist das Überwachungsmodul 201 und damit verbunden das Überwachungssystem 200 eingerichtet, das erfindungsgemäße Verfahren zum Überwachen des Überwachungsbereichs 203 auszuführen. Nach erfolgreichem Training ist das Überwachungsmodul 201 insbesondere eingerichtet, ausschließlich den Überwachungsbereich 203 und ausschließlich basierend auf den Sensordaten 207 des Überwachungssensors 205 zu überwachen. Durch die individuelle Anpassung des Überwachungsmoduls 201 auf die Eigenschaften des Überwachungsbereichs 203 und des Überwachungssensors 205 und den jeweiligen Sensordaten 207, auf denen das Training durchgeführt wurde, ist das Überwachungsmodul 201 nicht unmittelbar auf eine andere Sensorkonfiguration oder eine andere Perspektive des Sensors oder auf einen anderen Überwachungsbereich anwendbar. Durch das Training des Überwachungsmoduls 201 ist vielmehr eine individuelle exklusive Anpassung des Überwachungsmoduls 201 auf die Konfigurationen des Überwachungssystems 200, in dem das Überwachungsmodul 201 auszuführen ist, und insbesondere auf die Konfigurationen des verwendeten Überwachungssensors 205, der jeweiligen Sensordaten 207 und des Überwachungsbereichs 203 erreicht.

Zum Überwachen des Überwachungsbereichs 203 werden durch das Überwachungssystem 200 erfindungsgemäß Sensordaten 207 des Überwachungssensors 205 empfangen und das trainierte Überwachungsmodul 201 auf die Sensordaten 207 ausgeführt. Das entsprechend trainierte Überwachungsmodul 201 identifiziert hierbei die durch die entsprechenden Sensordaten 207 dargestellten Realzustände des Überwachungsbereichs 203, die einen Zustand des Überwachungsbereichs 203 zum Zeitpunkt der Aufnahme der Sensordaten 207 darstellen, durch Ausführung einer Anomalie-Detektion entweder als Normalzustand oder als eine Abweichung vom Normalzustand. Entsprechende Abweichungen werden durch das Überwachungsmodul 201 als überwachungsrelevante Ereignisse identifiziert. Bei Identifikation eines überwachungsrelevanten Ereignisses wird durch das Überwachungssystem 200 ferner eine entsprechende Warnmeldung ausgegeben, mittels welcher beispielsweise ein geschultes Personal auf das Vorliegen eines überwachungsrelevanten Ereignisses aufmerksam gemacht wird. Alternativ können weitere Handlungen eingeleitet werden, die in Abhängigkeit des jeweils vorliegenden überwachungsrelevanten Ereignisses eine adäquate Reaktion darstellen.

Das Überwachungssystem 200 ist ferner eingerichtet, das erfindungsgemäße Verfahren zur Driftkorrektur auszuführen. Hierzu ermittelt das Überwachungsmodul 201 einen Drift der Performance, der sich über eine Verschlechterung der Detektion von überwachungsrelevanten Ereignissen bzw. der Ermittlung des Normalzustands basierend auf den Sensordaten 207 darstellt. Hierzu kann das Überwachungsmodul 201 beispielsweise eingerichtet sein, die basierend auf den Sensordaten 207 generierten Realzustände mit entsprechenden Normalzuständen zu vergleichen und mit Zahlenwerten die Übereinstimmung zu quantifizieren. Basierend auf den derart quantifizierten Vergleichen bzw. den erstellten quantitativen Zahlenwerten kann somit eine Veränderung der Performance der Ermittlung bzw. Detektion von überwachungsrelevanten Ereignissen ermittelt werden. Bei Ermittlung eines derartigen Drifts kann erfindungsgemäß das Verfahren zum Training des Überwachungsmoduls 201 erneut ausgeführt werden und das Überwachungsmodul 201 nachtrainiert werden. Durch das derart ausgeführte Nachtraining kann das Überwachungsmodul 201 erneut auf die Charakteristiken des Überwachungsbereichs 203, des Überwachungssensors 205 bzw. der Sensordaten 207 angepasst werden. Diese können sich im Laufe der Zeit verändern, beispielsweise können im Überwachungsbereich 203 zusätzliche Objekte angeordnet werden oder die Qualität der Sensordaten 207 kann sich aufgrund von Degradation des Überwachungssensors 205 verschlechtern. Durch das erneute Ausführen des Trainings des Überwachungsmoduls 201 kann somit der Drift bzw. die Verschlechterung der Performance des Überwachungsmoduls 201 ausgeglichen werden.

Erfindungsgemäß kann das Verfahren zum Trainieren des Überwachungsmoduls 201 vor Ausführung des Überwachungsmoduls 201 bzw. des Überwachungssystems 200 zum Überwachen des Überwachungsbereichs 203 ausgeführt werden. Alternativ oder zusätzlich kann das Training wiederholt während der Ausführung des Überwachungssystems 200 ausgeführt werden.

Gemäß einer Ausführungsform kann das Überwachungssystem 200 eine Vielzahl von Überwachungssensoren 205 aufweisen, die entweder einen gemeinsamen oder eine Mehrzahl von Überwachungsbereichen 201 einsehen. Das Überwachungssystem kann hierzu eine Mehrzahl von Überwachungsmodulen 201 umfassen, die jeweils eingerichtet sind, basierend auf den Sensordaten der Überwachungssensoren eine Überwachung in Form einer Anomalie-Detektion auszuführen.

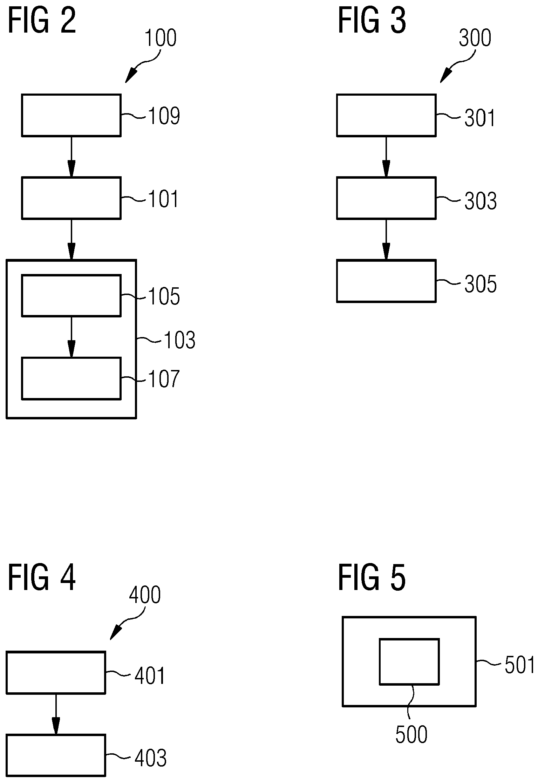

FIG 2 zeigt ein Flussdiagramm eines Verfahrens 100 zum Trainieren eines Überwachungsmoduls 201 eines Überwachungssystems 200 gemäß einer Ausführungsform.

Das erfindungsgemäße Verfahren 100 zum Trainieren eines Überwachungsmoduls 201 eines Überwachungssystems 200 zum Überwachen eines Überwachungsbereichs 203 kann durch ein Überwachungssystem 200 gemäß der Ausführungsform in FIG 1 ausgeführt werden.

Zum Trainieren des Überwachungsmoduls 201 kann in der gezeigten Ausführungsform zunächst in einem Verfahrensschritt 109 ein Vortraining des Überwachungsmoduls 201 basierend auf einem Trainingsdatensatz 213 ausgeführt werden, wobei der Trainingsdatensatz 213 weitere Sensordaten 207 umfasst, die dem Datentyp der Sensordaten 207 des Überwachungssensors 205 des Überwachungssystems 200, in dem das Überwachungsmodul 201 nach erfolgreichem Training ausgeführt werden soll, entsprechen. In dem Vortraining wird das Überwachungsmodul 201 auf den Datentyp der Sensordaten 207 bzw. den Typ des Überwachungssensors 205 angepasst. Das Vortraining kann hierbei vor Integration des Überwachungsmoduls 201 in das Überwachungssystem 200, in dem das Überwachungsmodul 201 nach Abschluss des Trainings auszuführen ist, ausgeführt werden.

In einem weiteren Verfahrensschritt 101 werden ferner zum Training des Überwachungsmoduls 201 Sensordaten 207 des Überwachungssensors 205 des Überwachungssystems 200 empfangen. Zur Ausführung des Trainings des Überwachungsmoduls 201 ist das Überwachungsmodul 201 bereits in das Überwachungssystem 200 integriert, in dem das Überwachungsmodul 201 nach Beendigung des Trainings auszuführen ist. Das Training wird hierbei auf den Sensordaten 207 des Überwachungssensors 205 ausgeführt, auf die das Überwachungsmodul 201 nach Abschluss des Trainings und zur Überwachung des zu überwachenden Überwachungsbereichs 203 später auszuführen ist. Die entsprechenden Sensordaten 207 werden hierbei durch den Überwachungssensor 205 in einem normalen Betrieb des Überwachungssystems 200 aufgenommen. Die Sensordaten 207 werden hierbei nicht explizit zum Erstellen eines Trainingsdatensatzes 213 zum Trainieren des Überwachungsmoduls 201 aufgenommen, sondern stellen tatsächliche Realzeitdaten des Überwachungssensors 205 dar, die dieser vom jeweils zu überwachenden Überwachungsbereich 203 aufnimmt.

In einem Verfahrensschritt 103 wird darauffolgend das Überwachungsmodul 201 basierend auf den empfangenen Sensordaten 207 durch Ausführung einer Anomalie-Detektion zum Detektieren von überwachungsrelevanten Ereignissen innerhalb des Überwachungsbereichs 203 trainiert.

Hierzu erlernt das Überwachungsmodul 201 in einem Verfahrensschritt 105 einen Normalzustand des Überwachungsbereichs 203, der einen Zustand des Überwachungsbereichs 203 beschreibt, in dem keine überwachungsrelevanten Ereignisse auftreten. Der Normalzustand hängt hierbei vom jeweils zu überwachenden Überwachungsbereich 203 ab und stellt typische Ereignisse, die sich im jeweiligen Überwachungsbereich 203 ergeben, dar.

In einem weiteren Verfahrensschritt 105 erlernt das Überwachungsmodul 201 ferner eine Detektion von Abweichungen von auf den Sensordaten 207 basierenden Realzuständen des Überwachungsbereichs 203 vom jeweils erlernten Normalzustand. Die entsprechend detektierten Abweichungen vom Normalzustand können hierbei als entsprechende überwachungsrelevante Ereignisse identifiziert werden.

FIG 3 zeigt ein Flussdiagramm eines Verfahrens 300 zum Überwachen eines Überwachungsbereichs 201 gemäß einer Ausführungsform.

Das erfindungsgemäße Verfahren 300 zum Überwachen eines Überwachungsbereichs 203 kann durch ein Überwachungssystem 200 gemäß der Ausführungsform in FIG 1 ausgeführt werden.

In einem Verfahrensschritt 301 werden zunächst Sensordaten 207 des Überwachungssensors 205 des Überwachungssystems 200 empfangen.

In einem Verfahrensschritt 303 wird das trainierte Überwachungsmodul 201 auf die Sensordaten 207 ausgeführt und durch das Überwachungsmodul 201 durch Ausführung einer Anomalie-Detektion ein überwachungsrelevantes Ereignis identifiziert.

In einem Verfahrensschritt 305 wird eine entsprechende, das überwachungsrelevante Ereignis beschreibende Warnmeldung ausgegeben.

FIG 4 zeigt ein Flussdiagramm eines Verfahrens 400 zur Driftkorrektur eines Überwachungsmoduls 201 eines Überwachungssystems 200 gemäß einer Ausführungsform.

Das erfindungsgemäße Verfahren 400 zur Driftreduktion eines Überwachungsmoduls 201 kann durch ein Überwachungssystem 200 gemäß der Ausführungsform in FIG 1 ausgeführt werden.

Hierzu wird in einem Verfahrensschritt 401 ein entsprechender Drift in Form einer Verschlechterung einer Performance des Überwachungsmoduls 201 ermittelt. Hierzu kann das Überwachungsmodul 201 einen Gütefaktor in Form eines quantifizierbaren Zahlenwerts ermitteln, mittels welchem eine Güte der Performance des Überwachungsmoduls 201 ermittelbar ist. Bei Veränderung des Gütewerts kann der Drift detektiert werden.

In einem Verfahrensschritt 403 wird darauffolgend erneut ein Training des Überwachungsmoduls 201 gemäß dem erfindungsgemäßen Verfahren 100 zum Trainieren des Überwachungsmoduls 201 ausgeführt.

FIG 5 zeigt eine schematische Darstellung eines Computerprogrammprodukts 500, umfassend Befehle, die bei der Ausführung des Programms durch eine Recheneinheit dieses veranlassen, das Verfahren 100 zum Trainieren eines Überwachungsmoduls 201 eines Überwachungssystems 200 zum Überwachen eines Überwachungsbereichs 203 und/oder das Verfahren 300 zum Überwachen eines Überwachungsbereichs 203 mit einem Überwachungssystem 200 und/oder das Verfahren 400 zur Driftkorrektur des Überwachungsmoduls 201 des Überwachungssystems 200 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (100) zum Trainieren eines Überwachungsmoduls (201) eines Überwachungssystems (200) zum Überwachen eines Überwachungsbereichs (203), wobei das Überwachungssystem (200) neben dem Überwachungsmodul (201) wenigstens einen am Überwachungsbereich (203) angeordneten Überwachungssensor (205) umfasst, der eingerichtet ist, den Überwachungsbereich (203) einzusehen, und wobei das Verfahren (100) umfasst:
- Empfangen (101) von Sensordaten (207) des wenigstens einen Überwachungssensors (205), wobei die Sensordaten (207) den Überwachungsbereich (203) abbilden und einen Realzustand des Überwachungsbereichs (203) darstellen, wobei ein Realzustand einen Zustand des Überwachungsbereichs (203) zu einem Aufnahmezeitpunkt beschreibt;
- Trainieren (103) des Überwachungsmoduls (201) basierend auf den empfangenen Sensordaten (207) durch maschinelles Lernen auf ein Detektieren eines überwachungsrelevanten Ereignisses innerhalb des Überwachungsbereichs (203) durch Ausführen einer Anomalie-Detektion, wobei das Trainieren (103) umfasst:
- Erlernen (105) eines Normalzustands des Überwachungsbereichs (203) durch das Überwachungsmodul (201), wobei ein Normalzustand des Überwachungsbereichs (203) einen Zustand beschreibt, in dem keine überwachungsrelevanten Ereignisse auftreten;
- Erlernen (107) einer Detektion einer Abweichung zwischen einem auf Sensordaten (207) basierenden Realzustand und dem Normalzustand und einer Identifikation der Abweichung als einer Detektion eines überwachungsrelevanten Ereignisses durch das Überwachungsmodul (201);
wobei zum Trainieren (103) das Überwachungsmodul (201) in das Überwachungssystem (200) am jeweils zu überwachenden Überwachungsbereich (203) integriert ist, wobei die Sensordaten (207) in einem Realbetrieb des Überwachungsbereichs (203) aufgenommen werden, und wobei das Überwachungsmodul (201) basierend auf den Sensordaten (207) des wenigstens einen Überwachungssensors (205) des Überwachungssystems (200) auf Eigenschaften des Überwachungsbereichs (203) und/oder des wenigstens einen Überwachungssensors (205) angepasst wird.

2. Verfahren (100) nach Anspruch 1, wobei das Trainieren (103) des Überwachungsmoduls (201) unmittelbar bei einer Aufnahme der Sensordaten (207) durch den wenigstens einen Überwachungssensor (205) ausgeführt wird.

3. Verfahren (100) nach Anspruch 1 oder 2, wobei die Eigenschaften des Überwachungsbereichs (203) bautechnische Ausgestaltungen des Überwachungsbereichs (203) und/oder ein Vorhandensein unbeweglicher Objekte innerhalb des Überwachungsbereichs (203) umfassen, und wobei Eigenschaften des Überwachungssensors (205) einen Typ des Überwachungssensors (205) und/oder der Sensordaten (207) und/oder eine Perspektive umfassen, in der der Überwachungsbereich (203) durch die Sensordaten (207) abgebildet wird.

4. Verfahren (100) nach einem der voranstehenden Ansprüche, wobei das Erlernen (105) des Normalzustands und/oder das Erlernen (107) der Detektion der Abweichung durch das Überwachungsmodul (201) basierend auf den Sensordaten (207) durch nicht-überwachtes oder überwachtes Lernen erfolgt, wobei bei nicht-überwachtem Lernen das Überwachungsmodul (201) unter Berücksichtigung einer Häufigkeit und Ähnlichkeit der detektierten Realzustände den Normalzustand erlernt, und wobei bei überwachtem Lernen dem Überwachungsmodul (201) durch ein geschultes Personal der Normalzustand und/oder ein überwachungsrelevante Ereignis gekennzeichnet wird, indem durch das Personal vom Überwachungsmodul (201) detektierte Abweichungen beurteilt und gemäß der Beurteilung dem Überwachungsmodul (201) als zum Normalzustand gehörig oder als überwachungsrelevantes Ereignis gekennzeichnet werden.

5. Verfahren (100) nach einem der voranstehenden Ansprüche, ferner umfassend:
Vortrainieren (109) des Überwachungsmoduls (201) basierend auf einem Trainingsdatensatz (213), wobei der Trainingsdatensatz (213) Sensordaten (211) eines Typs umfasst, der dem Typ der Sensordaten (207) des Überwachungssensors (205) entspricht, und wobei durch das Vortraining das Überwachungsmodul (201) auf den Typ der Sensordaten (207) und/oder den Typ des Überwachungssensors (205) des Überwachungssystems (200) trainiert wird.

6. Verfahren (100) nach einem der voranstehenden Ansprüche, wobei ein Normalzustand für einen vorbestimmten Zeitabschnitt bestimmt wird, wobei Normalzustände verschiedener Zeitabschnitte unterschiedlich sind, und wobei ein vorbestimmter Zeitabschnitt durch eine vorbestimmte Tageszeitspanne definiert ist.

7. Verfahren (100) nach einem der voranstehenden Ansprüche, wobei das Überwachungsmodul (201) ein Auto-Encoder-Modul umfasst, wobei das Auto-Encoder-Modul eingerichtet ist, basierend auf den Sensordaten (207) des wenigstens einen Überwachungssensors (205) einen Realzustand zu bestimmen und den Realzustand mit dem erlernten Normalzustand zu vergleichen.

8. Verfahren (100) nach einem der voranstehenden Ansprüche, wobei der Überwachungsbereich (203) einen Bereich aus der folgenden Liste umfasst: einen Gleisbereich, einen Bahnsteigbereich, einen Eingangshallenbereich, einen ausschließlich für autorisiertes Personal zugänglichen Bereich innerhalb eines Bahnhofsgeländes, einen Depotbereich für Züge und/oder Zug- bzw. Schienenmaterial.

9. Verfahren (100) nach Anspruch 8, wobei ein vom Normalzustand abweichendes überwachungsrelevantes Ereignis eine der folgenden Situationen beschreibt:
eine Person und/oder ein Gegenstand befindet sich in einem Gleisbereich; und/oder
ein Gegenstand blockiert ein Gleis oder eine Stromführungsleitung; und/oder
eine Anzahl an einem Bahnsteig befindlicher Personen übersteigt eine zulässige Maximalanzahl; und/oder am Bahnsteig befindet sich ein abgestellter unbeaufsichtigter Gegenstand; und/oder
eine nicht-autorisierte Person befindet sich in einem nicht öffentlich zugänglichen Bereich; und/oder
eine gefährliche und/oder illegale Handlungen findet statt.

10. Verfahren (100) nach einem der voranstehenden Ansprüche, wobei das Training (103) des Überwachungsmoduls (201) vor Inbetriebnahme des Überwachungssystems (200) und/oder wiederholt während eines Betriebs des Überwachungssystems (200) ausgeführt wird.

11. Verfahren (100) nach einem der voranstehenden Ansprüche, wobei die Sensordaten (207, 211) Bilddaten und/oder Videodaten und/oder Radardaten und/oder Infrarotdaten umfassen.

12. Verfahren (300) zum Überwachen eines Überwachungsbereichs (203) mit einem Überwachungssystem (200) mit einem Überwachungsmodul (201), das nach dem Verfahren (100) zum Trainieren eines Überwachungsmoduls (201) nach einem der voranstehenden Ansprüche 1 bis 11 trainiert ist, umfassend:
Empfangen (301) von Sensordaten (207) des Überwachungssensors (205) des Überwachungssystems (200), wobei die Sensordaten (207) den zu überwachenden Überwachungsbereich (203) abbilden und einen Realzustand des Überwachungsbereichs (203) darstellen;
Ausführen (303) des trainierten Überwachungsmoduls (201) auf die Sensordaten (207) und Detektieren eines überwachungsrelevanten Ereignisses durch Ausführen einer Anomalie-Detektion; und
Ausgeben (305) einer das überwachungsrelevante Ereignis anzeigenden Warnmeldung.

13. Verfahren (400) zur Driftkorrektur des Überwachungsmoduls (201) des Überwachungssystems (200), umfassend:
Ermitteln (401) eines Drifts des Überwachungsmoduls (201) während einer Überwachung des Überwachungsbereichs (203) durch das Überwachungssystem (200) gemäß dem Verfahren (300) zum Überwachen eines Überwachungsbereichs (203) nach Anspruch 12, wobei der Drift als eine Verschlechterung eines Detektierens eines überwachungsrelevanten Ereignisses durch das Überwachungsmodul (201) ermittelt wird; und
Ausführen (403) eines Trainings des Überwachungsmoduls (201) gemäß dem Verfahren (100) zum Trainieren eines Überwachungsmoduls (201) nach einem der voranstehenden Ansprüche 1 bis 11.

14. Recheneinheit (202), wobei die Recheneinheit (202) ausgebildet ist, das Verfahren (100) zum Trainieren eines Überwachungsmoduls (201) eines Überwachungssystems (200) zum Überwachen eines Überwachungsbereichs (203) nach einem der voranstehenden Ansprüche 1 bis 11 und/oder das Verfahren (100) zum Überwachen eines Überwachungsbereichs (203) mit einem Überwachungssystem (200) nach Anspruch 12 und/oder das Verfahren (100) zur Driftkorrektur des Überwachungsmoduls (201) des Überwachungssystems (200) nach Anspruch 13 auszuführen.

15. Computerprogrammprodukt (500) umfassend Befehle, die bei der Ausführung des Programms durch eine Datenverarbeitungseinheit diese veranlassen, das Verfahren (100) zum Trainieren eines Überwachungsmoduls (201) eines Überwachungssystems (200) zum Überwachen eines Überwachungsbereichs (203) nach einem der voranstehenden Ansprüche 1 bis 11 und/oder das Verfahren (300) zum Überwachen eines Überwachungsbereichs (203) mit einem Überwachungssystem (200) nach Anspruch 12 und/oder das Verfahren (400) zur Driftkorrektur des Überwachungsmoduls (201) des Überwachungssystems nach Anspruch 13 auszuführen.
